# EUROPÄISCHE PATENTSCHRIFT

(11) **EP 0 453 620 B1**
(45) Veröffentlichungstag und Bekanntmachung des Hinweises auf die Patenterteilung: **15.09.1993**
(21) Anmeldenummer: 90108187.7
(22) Anmeldetag: 28.04.1990
(51) Int. Cl.: E04C 1/40, B09B 3/00

(54) **Verbundformstein und Verfahren zur Herstellung eines derartigen Steines**
Interconnectable moulded block and method of manufacturing such a block
Bloc interassemblable moulé et procédé pour la fabrication d'un tel bloc

(43) Veröffentlichungstag der Anmeldung: 30.10.1991
(73) Patentinhaber: Hohenleitner, Herbert, D-90513 Zirndorf (DE); Schiller, Gerhard, D-90513 Zirndorf (DE)
(72) Erfinder: Hohenleitner, Herbert, D-90513 Zirndorf (DE); Schiller, Gerhard, D-90513 Zirndorf (DE)
(74) Vertreter: Hafner, Dieter, Dr.rer.nat., Dipl.-Phys.

(56) Entgegenhaltungen:
- EP-A- 0 107 269
- AU-B- 433 245
- DE-A- 2 839 899
- DE-A- 3 100 906
- DE-A- 3 725 749
- FR-A- 2 375 405
- GB-A- 1 227 960
- US-A- 3 440 788

## Beschreibung

Die Erfindung betrifft einen Verbundformstein zur Errichtung von Gebäuden, Fundamenten, Straßenunterbauten, Brücken oder dergleichen.

Ferner betrifft die Erfindung ein Verfahren zur Herstellung eines derartigen Verbundformsteines.

In den vergangenen Jahrzehnten wurde im Bauwesen bekanntlich von Asbestmaterialien in unterschiedlichen Formen und Zusammensetzungen Gebrauch gemacht, wobei insbesondere das sog. Spritzasbestmaterial, das zum Brandschutz, zur Schall- und Wärmedämmung oder zum Feuchtigkeitsschutz verbaut wurde, als besonders kritisch anzusehen ist. Darüber hinaus wurden bekanntlich auch große Mengen an plattenförmigen Asbestmateralien unterschiedlicher Rohdichte hergestellt und verbaut, z. B. Faserzementprodukte. Die häufigsten Verwendungszwecke für derartige Asbestmateralien waren: Spritzasbestputze, Asbestmatten, Asbestschnüre und - dichtungen, Asbestschaum und -kleber, asbesthaltige Vinylbodenplatten sowie asbesthaltige Feuerschutzplatten.

Es ist bekannt, daß derartige Asbestmaterialien umso kritischer sind, je leichter sie sind. Eine derzeitige Grenze liegt bei einer Rohdichte von 1000 kg/m³ und Materialien, welche unter diesem Grenzwert liegen - es wurden auch schon Materalien mit 400 kg/m³ gefunden -, haben ein weit höheres Faserfreisetzungspotential als fester gebundene Asbestmaterialien.

Natürliche Alterungsprozesse, mechanische Einwirkungen sowie thermische und klimatische Einflüsse bewirken zudem eine fortschreitende Auflösung der Oberflächenstruktur und somit hohe Emissionswerte.

Im Zuge der aktuellen Asbestentsorgung, die in der letzten Zeit mehr und mehr durch die Presse bekanntgeworden ist, sind derzeit i. w. die folgenden Verfahren üblich:

Der Asbest wird aus den betroffenen Gebäuden entfernt und in Form eines Asbestzementbreies auf Deponien gebracht. Dieser Asbestzementbrei hat natürlich nach Aushärtung eine Oberfläche, die auch Fasern enthält. Zwar ist aus DE-OS 37 25 749 bekannt, Materialien, die vorher eine Rohdichte von ca. 400 oder 600 oder 800 kg/m³ aufwiesen, höhergewichtig zu binden, so daß die Faserfreigabe reduziert ist. Es läßt sich jedoch nicht ohne weiteres sicherstellen, daß bei langfristiger Verwitterung wiederum Asbestfasern in die Luft gelangen. Daher müssen derartige Asbestzementbreiklumpen, wenn sie auf den Deponien lagern, zusätzlich noch abgedeckt oder überdeckt werden, was ein insgesamt betrachtet sehr deponiebelastendes und aufwendiges Entsorgungsverfahren darstellt.

Es ist darüber hinaus bereits versucht worden, andersartige Hüllen um die Asbestrückstände herum zu formen. In diesem Zusammenhang wurden, wie beispielsweise aus EP 0 107 269 und U.S. 3,440,788 bekannt Kunststoffkisten, Kunststoffhäute oder -folien bis hin zu Anstrichen angewendet. Aber auch derartige Verfahren sind alles andere als quasi umweltfreundlich, und zwar nicht zuletzt auch deswegen, weil sie ebenfalls die Deponien belasten, zumal da auch durch solche Kunststoffumhüllungen und dergleichen zusätzliche Umweltprobleme auftreten. Insbesondere sind derartige Kunststoffumhüllungen aber auch gegen leichteste mechanische Einwirkungen außerordentlich anfällig.

Eine weitere bekannte Methode besteht in dem sog. Verglasen von Asbest. Es handelt sich hierbei um ein Verfahren, welches sich derzeit noch in der Erprobungsphase befindet. Im Prinzip besteht ein derartiges Verfahren in einer Verschmelzung von asbesthaltigem Material und Glasgranulat in einem Glasofen. Anschließend wird die Glas-Asbestmaterial-Schmelze durch eine Düse hindurch in eine Wasservorlage gespritzt, so daß dort nun ein Abschreckprozeß stattfindet, der schließlich zu einem Glasgranulat führt, in welches der Asbest eingeschlossen ist. Aber auch bei einem derartigen Verfahren ist nicht 100%ig sichergestellt, daß keine Asbestfasern an den Glasoberflächen wieder frei werden. Allerdings ist bei einem solchen Glasgranulat eine an sich sehr gute Bindung Glas-Asbestfasern vorhanden. Der große Nachteil an diesem Verfahren scheint aber die Energiebilanz und damit die Wirtschaftlichkeit zu sein.

Mit Rücksicht auf den wie oben geschilderten Sachverhalt liegt der vorliegenden Erfindung die Aufgabe zugrunde, einen Verbundformstein zu schaffen und diesen in der Weise auszubilden, daß die Asbest-Entsorgungsproblematik mit Hilfe eines derartigen Verbundformsteines in verhältnismäßig einfacher Weise gelöst werden kann, indem der zu entsorgende Asbest in eine Form gebracht wird, in welcher er unproblematisch sozusagen wieder verbaut werden kann, beispielsweise zur Errichtung von Gebäuden, Fundamenten, Straßenunterbauten, Brücken und dergleichen mehr, wobei irgendeine Umweltbelastung von vorneherein so gut wie völlig ausgeschlossen werden kann.

Diese Aufgabe wird durch die kennzeichnenden Merkmale des Anspruchs 1 gelöst, wobei zweckmäßige Weiterbildungen der Erfindung durch die in den Unteransprüchen 2 - 18 wiedergegebenen Merkmale gekennzeichnet sind.

Als Kerngedanke der Erfindung wird es angesehen, eine formstabile Hülle oder ein Außenteil in der Form eines Betontroges oder einer Betonsteinhülle zu schaffen, welche(r)einen Kern aus ausgehärteter Asbest-Zement-Masse umgibt, die in der Lage ist, mit der Hülle oder dem Außenteil eine feste Verbindung einzugehen. Die im Zuge von Recycling gewonnenen Abbruchasbestteile oder - materialien sind in die Zementmatrix des Kernes fest eingebunden, während darüber hinaus die Oberseite des Kernes von einem Dichtelement abgedeckt wird.

Hierdurch wird ein sehr formstabiler Verbundformstein geschaffen, der die Vorteile des Asbests (insbesondere Lärmschutz, Brandschutz, Schallschutz) aufweist. Durch die völlig asbestfaserfreie Hülle bzw. das trogartige Außenteil aus reinem Beton ist gewährleistet, daß keine Faserfreisetzungsprozesse erfolgen können, wie dies bei allen bisher bekannten Verfahren der Fall war, so daß auch kein weiteres Umweltproblem wie bei Kunststoffen oder anderen anorganischen Materialien auftreten kann.

In bevorzugter Weise ist das trogartige Außenteil selbsttragend.

Besonders vorteilhaft ist es darüber hinaus, wenn der Kern aus ausgehärteter Asbest-Zementmasse eine Rohdichte von ≧ 1000 kg/m³ aufweist. Es ist außerdem besonders günstig, wenn zwischen der Oberfläche des Kernes und der Innenwandung des trogartigen Außenteils eine insbesondere zur Haftverbesserung dienende Zwischenschicht angeordnet ist, vorzugweise eine elastische Zwischenschicht. Eine derartige Zwischenschicht ist insbesondere mit der Oberseite des Kernes fest verbunden und umschließt diese bei einem etwaigen Bruch des Außenteils vollkommen fest.

Ferner kann es günstig sein, wenn zwischen der Zwischenschicht und der Innenwandung des Außenteils noch eine Trennschicht vorgesehen ist, z. B. in der Form eines Trennwachses.

Gemäß einer weiteren Ausgestaltung der Erfindung kann das trogartige Außenteil eine Armierung, insbesondere eine Stahlarmierung aufweisen. Diese Armierung kann vorzugsweise in den Innenraum des trogartigen Außenteils hineinstehende Abschnitte aufweisen, die mit dem ausgehärteten Kern Verbindungsanker bilden.

Beispielsweise kann eine derartige Armierung aus Doppel-T-Trägern bestehen, wobei ein T-Element frei in den Innenraum des trogartigen Außenteils hineinsteht.

Darüber hinaus können aber auch Armierungsabschnitte in bevorzugter Weise in den Bereich des Dichtelementes hineinstehen, welches die Oberseite des Kernes völlig überdeckt.

Es ist außerordentlich günstig, wenn dieses Dichtelement aus einem formstabilen Deckel gebildet ist, analog zur formstabilen Umhüllung in der Form des trogartigen Außenteils, wobei es besonders vorteilhaft ist, wenn dieses Dichtelement ebenfalls durch einen Betondeckel gebildet wird. Ein solcher Betondeckel kann vorzugsweise nach dem Eingießen und dem Aushärten des aus der Asbest-Zement-Masse bestehenden Kernes in den verbleibenden Innenbereich des Außenteils eingegossen werden und sich mit dem Rand des Außenteiles verbinden.

Auf der anderen Seite besteht aber auch die Möglichkeit, daß das die Oberseite des Kernes überdeckende Dichtelement aus einer gesonderten elastischen Schicht besteht, wobei eine derartige Schicht vorzugsweise mit der Oberseite des Kernes verklebt sein kann.

Weiterhin liegt es im Rahmen der Erfindung, das Dichtelement so auszubilden, daß es einen i. w. umgekehrt hutförmigen Profilquerschnitt aufweist. Hierbei kann dieses Dichtelement vorzugsweise umlaufende, von einem Mittelteil aus i. w. rechtwinklig abgewinkelte Randabschnitte aufweisen, die zur unmittelbaren Auflage auf und Verbindung mit entsprechenden freien, oberen Randflächen des trogartigen Außenteiles gelangen.

Ferner kann es hierbei vorteilhaft sein, daß das die umlaufenden Randabschnitte miteinander verbindende flächige Mittelteil des Dichtelements zur vorzugweise unmittelbaren Auflage auf und Verbindung mit der zunächst noch freiliegenden Oberseite des Kernes gelangt.

Eine weitere Ausgestaltung des erfindungsgemäßen Verbundformsteines kann darin bestehen, daß die Unterseite des trogartigen Außenteils mit einem zusätzlichen, vorzugsweise plattenartig ausgebildeten Basiselement oder dergleichen versehen ist, welches vorzugsweise ebenfalls aus Beton oder dergleichen besteht.

Ein derartiges Basiselement kann insbesondere dem Öffnungsquerschnitt des Innenraumes des trogartigen Außenteils entsprechende Längen- und Breitendimensionen aufweisen.

In dem Falle, daß ein Dichtelement mit einem i. w. umgekehrt hutförmigen Profilquerschnitt verwendet wird, besteht die vorteilhafte Möglichkeit, daß das Basiselement auf der Unterseite des trogartigen Außenteils in der Weise ausgebildet ist, daß es eine dem inneren Hutprofilquerschnitt des Dichtelements angepasste Dimensionierung aufweist, wodurch das Basiselement in die durch das Hutprofil des Dichtelements gebildete Ausnehmung passend einsetzbar ist.

Aufgrund der zuletzt erläuterten Ausgestaltung des Verbundformsteines besteht die außerordentlich vorteilhafte Möglichkeit, die resultierenden Steine in einfacher Weise aufeinander in einer Art von Stapelbauweise anzuordnen, wobei jeweils ein Basiselement eines Steines von einer Ausnehmung des Dichtelements eines unmittelbar darunter angeordneten weiteren Steines aufgenommen wird.

Hierdurch ergibt sich in einfacher Weise auch eine Austauschbarkeit der einen oder anderen Steines, wenn derartige Verbundsteine miteinander verbaut worden sind.

Die erfindungsgemäß ausgebildeten Verbundformsteine lassen sich gemäß den Ansprüchen 19-24 in bevorzugter Weise insbesondere als Lärmschutzwallbauelemente und/oder als thermische Isolierelemente und/oder als Sichtschutzwallbauelemente und/oder als Böschungsbauelemente und/oder als Uferbefestigungsbauelemente und/oder allgemein als Füllmaterialien verwenden, beispielsweise auch im Straßenunterbau.

Durch die vorliegende Erfindung werden insbesondere die Vorteile erzielt, daß eine Deponie von im Zuge einer Asbestentsorgung anfallenden Abbruchasbestmaterialien auf einer Hausmüll-, Bauschutt-, Reststoff- oder Sonderdeponie überhaupt nicht zu erfolgen braucht, so daß letztendlich die Erfindung bei den gegebenen Deponieproblemen auf lange Sicht zu einer deutlichen und spürbaren Entlastung führt, da nach den bis jetzt bekannten Entsorgungstechnologien Asbest in voluminöser Form angeliefert und auf Deponien unterverbaut werden muß. Alle bisher bekannten Deponieverfahren schließen auf lange Sicht ein Faserfreisetzungspotential nicht aus oder schaffen durch den Einsatz anorganischer Materialien sogar neue, nicht abwägbare Umweltprobleme. Wesentlich ist, daß aufgrund des erfindungsgemäßen Verbundformsteines keine wertvollen vorhandenen Deponieflächen mehr beansprucht werden brauchen, während andererseits im Gegenzug praktisch neue, geordnete Deponien im Rahmen der Gesetzmäßigkeit entstehen.

Durch die Schaffung des erfindungsgemäßen Verbundformsteines wird eine Freisetzung des eingeschlossenen Problemstoffes durch Witterung und klimatische Einflüsse, durch Einwirkung von Säuren und Laugen und durch mechanische Einwirkungen von vorneherein völlig ausgeschlossen.

Es ist weiterhin Aufgabe der vorliegenden Erfindung, ein Verfahren zur Herstellung eines Verbundformsteines zu schaffen, und dieses Verfahren ist erfindungsgemäß durch die Verfahrensschritte a) bis e) gemäß Anspruch 25 gekennzeichnet,.

Vorteilhafte weitere Verfahrensausgestaltungen ergeben sich aus den Ansprüchen 26 und 27.

Es kann im übrigen daran gedacht werden, nicht nur Asbest auf diese Weise zu entsorgen, sondern auch andere umweltgefährdende Stoffe, die mit Zement eine feste Verbindung eingehen können. Unter Einbeziehung dieses Aspektes wird durch die Erfindung allgemein ein wiederverwendbares Bauteil in der Form eines Verbundformsteines oder Betonsteines oder Betonformteiles geschaffen, welches dadurch gekennzeichnet ist, daß nach Art von Recycling ein Problemstoff wie insbesondere Asbest als Kern in extrem hoher Festigkeit mit einem umhüllenden Hohlkörper aus Beton oder dergleichen zu einer quasi homogenen Einheit verarbeitet ist.

Derartige Bauteile sind kennzeichnungspflichtig gemäß TRGS 517 und Gefahrstoffverordnung, jedoch nicht deponiepflichtig gemäß Abfallbeseitigungsgesetz.

Der Gegenstand der Erfindung wird anhand von mehreren, in den beigefügten Figuren dargestellten Ausführungsbeispielen näher erläutert.

Es zeigen:
- Fig. 1: schematisch in einer perspektivischen Darstellung ein trogartiges Außenteil für einen Verbundformstein;
- Fig. 2: einen Querschnitt durch einen fertigen Verbundformstein gemäß einer ersten Ausführungsart;
- Fig. 3: einen Querschnitt durch einen fertigen Verbundformstein gemäß einer zweiten Ausführungsart;
- Fig. 4: einen Querschnitt durch einen Verbundformstein gemäß einer dritten Ausführungsart;
- Fig. 5: einen Querschnitt durch einen Verbundformstein gemäß einer vierten Ausführungsart;
- Fig. 5a: eine schematische perspektivische Ansicht eines Dichtelementes für den Verbundformstein gemäß Fig. 5;
- Fig. 6: schematisch in einer perspektivischen Ansicht verschiedene geometrische Ausführungsarten von Verbundformsteinen.
- Fig. 7: einen Verbundformstein, der auf seiner Unterseite eine Mehrzahl von Basisteilen aufweist derart, daß der Verbundformstein unter ihm nebeneinander aufgestellte Verbundformsteine unter Eingriff seiner Basiselemente überdecken kann.

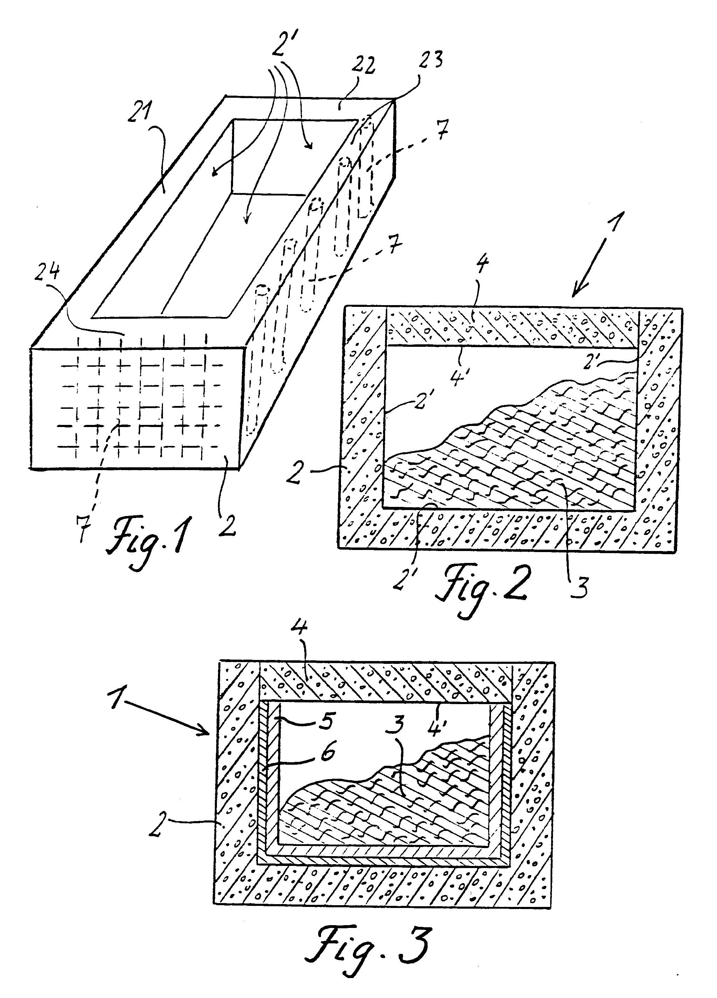

In der Figur 1 ist ein i. w. quaderförmiges, trogartiges Außenteil 2 dargestellt, das aus Beton oder einem ähnlichen Material besteht. Die Innenwandung des Außenteils 2 ist mit 2' bezeichnet, während die oberen freien Randflächen des Außenteils 2 mit den Bezugsziffer 21, 22, 23 und 24 versehen sind.

In die Wandungen des trogartigen Außenteils 2 können weiterhin Armierungen 7 eingelassen sein, beispielsweise in der Form von Bewehrungsmatten oder von Armierungsstäben, wie dies in Figur 1 schematisch angedeutet ist.

Wie aus Figur 2 zu ersehen ist, besteht ein fertiger Verbundformstein 1 insgesamt aus dem trogartigen Außenteil 2 gemäß Fig. 1, einem Kern 3 aus ausgehärteter Asbest-Zementmasse, die i. w. aus Recyled-Abbruchasbestmaterialien und Zement besteht, sowie aus einem die Oberseite des Kernes 3 überdeckenden Dichtelement 4.

Der Kern 3 ist in bevorzugter Weise so ausgebildet, daß er eine Rohdichte ≧ 1000 kg/m³ aufweist.

Das Dichtelement 3 ist ebenfalls durch einen formstabilen Betondeckel gebildet, dessen Innenwandung mit 4' bezeichnet ist.

Bei der Herstellung dieses Verbundformsteines wird in der Weise vorgegangen, daß zunächst das trogartige Außenteil 2 aus Beton oder dergleichen gefertigt wird, daß anschließend eine gießfähige Mischung hergestellt wird, die vorzugsweise aus innerhalb eines geschlossenen Systems zermahlenen Recyled-Abbruchasbestmaterialien, Wasser, Zement und gegebenenfalls weiteren Füllstoffen besteht, wobei sodann diese Gießmasse in den Innenraum des Außenteils 2 eingegossen wird. Die eingegossene Masse härtet dann zu dem festen Kern 3 aus, so daß anschließend auf die Oberseite dieses Kernes das diesen vollständig überdeckende Dichtelement 4, insbesondere in der Form des Betondeckels aufgebracht werden kann. Die Oberflächen dieses Kernes 3 gehen hierbei mit den Innenwandungen 2' des Außenteils 2 und der Innenwandung 4' des Dichtelements 4 eine vollkommen feste Verbindung ein.

In bevorzugter Weise kann es sich bei einer solchen Verbindung um eine formschlüssige Verbindung zwischen den Oberflächen des Kernes 3, den Innenwandungen 2' des Außenteils 2 und der Innenwandung 4' des Dichtelements 4 handeln.

Wie ferner aus den Figuren 3 - 5 zu ersehen ist, besteht die Möglichkeit, den Verbundformstein in der Weise auszugestalten, daß zwischen der Oberfläche des Kernes 3 und der Innenwandung 2' des Außenteils 2 noch zusätzliche Schichten angeordnet werden, wobei es sich insbesondere um eine Zwischenschicht 5 sowie um eine Trennschicht 6 handelt. Es kann natürlich auch nur die Zwischenschicht 5 allein vorgesehen sein, d. h. zwischen der Oberfläche des Kernes 3 und der Innenwandung 2' des Außenteils 2 angeordnet sein, wobei diese Zwischenschicht 5 insbesondere die Aufgabe hat, die Haftung zwischen der Oberfläche des Kernes 3 und der Innenwandung 2' zu verbessern.

Diese Zwischenschicht 5 kann beispielsweise auch elastisch ausgebildet sein.

Sie ist auf jeden Fall mit der Oberseite des Kernes 3 verbunden, derart, daß die Zwichenschicht 5 den Kern im Falle eines etwaigen Bruches des Außenteils 2 fest umschließt.

Bei der Trennschicht 6, die noch zwischen der Zwischenschicht 5 und der Innenwandung 2' des Außenteils 2 vorgesehen sein kann, kann es sich beispielsweise um ein Trennwachs handeln, wodurch die Möglichkeit gegeben ist, im Bedarfsfalle den Kern 3 in verhältnismäßig einfacher Weise aus dem Verbundformstein 1 wieder herauslösen zu können.

Darüber hinaus ist es denkbar, daß die Zwischenschicht 5 auch zwischen der Innenwandung 4' des Dichtelementes 4 und der dort angrenzenden Oberfläche des Kernes 3 vorgesehen wird, gegebenenfalls aber auch zusätzlich die Trennschicht 6.

Im Zuge der Herstellung des in der Figur 3 dargestellten Verbundformsteines kann also insbesondere die Innenwandung 2' des trogartigen Außenteils 2 vor dem Eingießen der Abbruchasbest-Zementmasse mit der Zwischenschicht 5 ausgekleidet werden, und alternativ hierzu kann zunächst aber auch die Trennschicht 6 auf die Innenwandung 2' des Außenteils 2 aufgebracht werden, wobei in diesem Falle sodann die Zwischenschicht 5 auf die Trennschicht 6 aufgespritzt oder in einer sonstigen Art und Weise aufgetragen wird. Das Eingießen der Abbruch-Asbestzementmasse in den noch verbleibenden Innenraum des trogartigen Außenteils 2 kann vorzugsweise noch vor der Aushärtung der Zwischenschicht erfolgen.

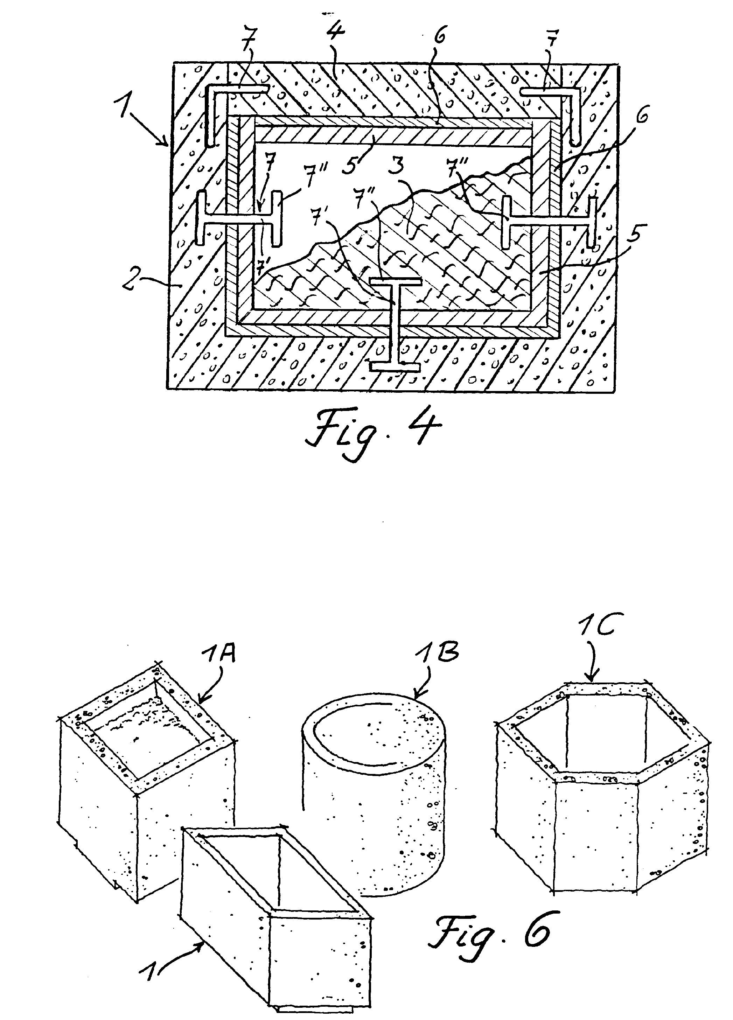

Aus der Figur 4 ist ein weiteres Ausführungsbeispiel eines Verbundformsteines 1 zu ersehen, bei welchem das Außenteil 2 zusätzlich noch eine Stahlarmierung 7 aufweist, die im gezeigten Ausführungsbeispiel aus Doppel-T-Trägern 7' besteht, von denen jeweils T-Elemente 7'' in den Innenraum des Außenteils 2 hineinragen. Darüber hinaus können aber auch Stahlarmierungen vorgesehen sein, die in etwa winkelförmig ausgebildet sind und von denen Abschnitte auch in den Bereich des durch einen Betongußdeckel 4 gebildeten Dichtelements hineinstehen.

Auf jeden Fall bilden die in den Inneraum des Außenteils 2 hineinstehenden Armierungsabschnitte letztendlich Verbindungsanker mit dem ausgehärteten Kern 3.

Es sind selbstverständlich auch andere Ausführungsformen von Armierungen denkbar, beispielsweise senkrecht oder waagrecht verlaufende Armierungsstäbe oder Bewehrungsmatten, wie dies bereits in der Figur 1 angedeutet ist.

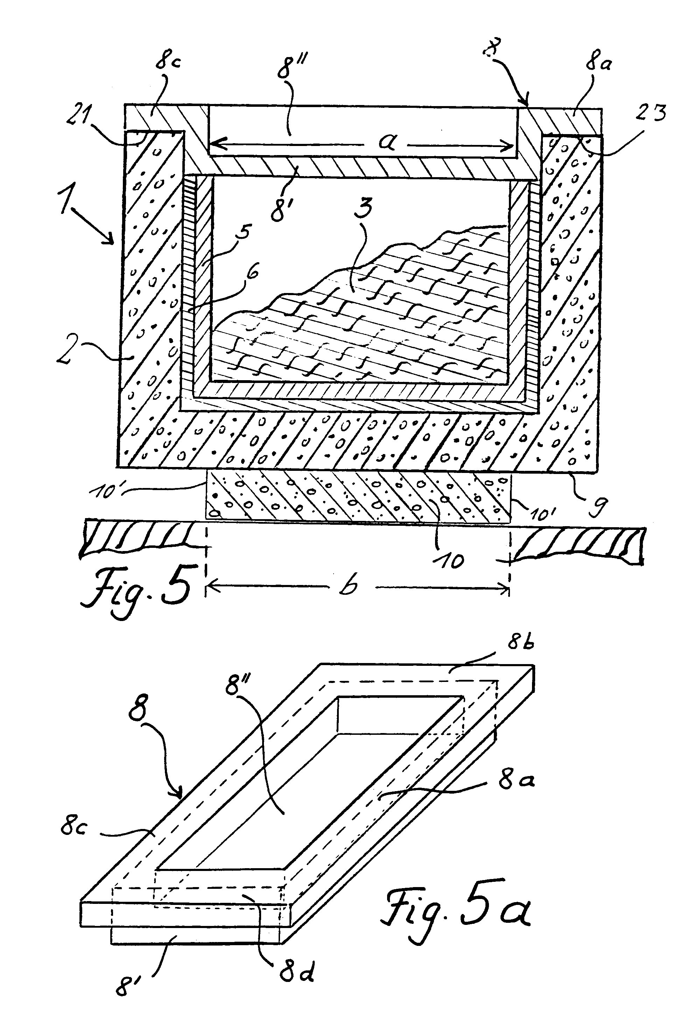

Wie weiterhin aus der Figur 5 zu ersehen ist, besteht die Möglichkeit, ein Dichtelement 8 vorzusehen, welches einen i. w. hutförmigen Profilquerschnitt hat. Wie im einzelnen aus der Figur 5a zu ersehen ist, weist das deckelartig ausgebildete Dichtelement 8 ein Mittelteil 8' auf, von welchem aus Randabschnitte 8a, 8b, 8c und 8d i. w. rechtwinklig abgewinkelt sind, derart, daß oberhalb des Mittelteils 8' eine Ausnehmung 8'' entsteht. Dieses Dichtelement 8 wird nun in der Weise auf die Oberseite des Außenteils 2 und gleichzeitig auch auf die Oberseite des Kernes 3 aufgebracht, daß die Randabschnitte 8a - 8d zur unmittelbaren Auflage auf und zur Verbindung mit den entsprechenden oberen Randflächen 21, 22, 23 und 24 des trogartigen Außenteils 2 gelangen und daß andererseits aber auch das die Randabschnitte 8a bis 8d miteinander verbindende flächige Mittelteil 8' zur unmittelbaren Auflage auf und Verbindung mit der Oberseite des Kernes 3 gelangt, wie dies aus der Querschnittsdarstellung gemäß Figur 5 zu ersehen ist.

Darüber hinaus ist die Unterseite 9 des Außenteils 2 mit einem Basiselement 10 versehen ,das vorzugsweise ebenfalls aus Beton oder einem ähnlichen Material besteht. Insbesondere ist dieses Basiselement 10 in der Weise ausgebildet, daß es eine dem inneren Hutprofilquerschnitt des Dichtelementes 8 angepasste Dimensionierung aufweist, insbesondere entspricht die Breite b des Basiselements 10 genau der Breite a der Ausnehmung 8'', wobei eine entsprechende Anpassung natürlich auch für die jeweiligen Längendimensionen gilt. Aufgrund dieser Ausbildung ist jedenfalls sichergestellt, daß das Basiselement 10 in die durch das Hutprofil des Dichtelements 8 gebildete Ausnehmung 8'' passend einsetzbar ist, wenn jeweils zwei Betonformsteine dieser Ausführungsart unmittelbar aufeinandergestapelt werden.

Außerdem können die zwischen den Außenrändern 10' des Basiselements 10 und der Unterseite 9 des Außenteils 2 einerseits und dem Erdboden andererseits gebildeten Ausnehmungen oder Aussparungen zu einem Staplertransport der Verbundformsteine genutzt werden.

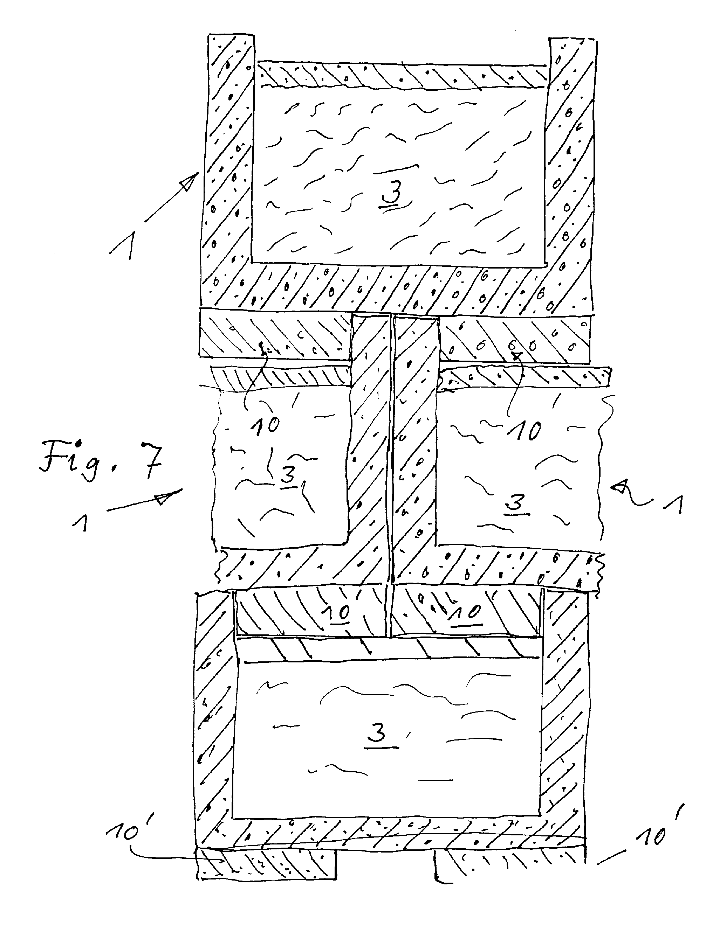

Wie schließlich aus der Figur 6 noch zu entnehmen ist, besteht die Möglichkeit, die resultierenden Verbundformsteine in verschiedenen geometrischen Konfigurationen auszugestalten, beispielsweise in der Art eines würfelförmigen Steines 1A, eines zylinderförmigen Steines 1B, eines Steines 1C in Hexaederform oder eines Steines 1 in Quaderform, wie er bereits weiter oben erläutert ist.

Die resultierenden Verbundformsteine lassen sich in vielfältiger Weise verwenden, beispielsweise zur Uferbefestigung, als Füllmaterial, z. B. in Verbindung mit Folien oder Bitumenbahnen aus Abdichtungsgründen, oder aber auch in Verbindung mit einem natürlichen Material wie z. B. Lehm. Darüber hinaus lassen sich diese Verbundformsteine aber auch als Lärmschutzwall, als Böschung, als Sichtschutz, als Freianlagengestaltung und dergleichen mehr verbauen, insbesondere mit oder ohne Erdverbauung.

Bei dem in Figur 7 dargestellen Ausführungsbeispiel ist der gezeigte Verbundformstein auf seiner Unterseite mit vier Basiselementen 10' versehen. Dies hat den Vorteil, daß eine derartiger Verbundformstein zur Bildung eines Mauerverbundes über darunterliegende, nebeneinander gesetzte Verbundformstein gesetzt werden kann und durch Eingriff seiner Basiselemente in zwei nebeneinanderliegen Verbundformsteine unter ihm eine formschlüssige Verbindung schafft. Beim dargestellten Ausführungsbeispiel sind vier Basiselemente 10' dargestellt, es ist aber genausogut möglich, Verbundformsteine mit zweien oder mit sechsen oder mit einer noch größeren Anzahl von Basiselementen zu schaffen, so daß sich gleichsam ein Steckbausteinprinzip ergibt. Ebenso ist es möglich, die eingreifenden Basiselemente als Deckelelemente oder Deckelzapfen vorzusehen, die in Ausnehmungen von darüber gestapelten Verbundformsteinen eingreifen können.

## Patentansprüche

1. Verbundformstein (1) zur Errichtung von Gebäuden, Fundamenten, Straßen, Unterbauten, Brücken oder dgl., bestehend aus
- einem trogartigen Außenteil (2) aus Beton;
- einem Kern (3) aus ausgehärteter Asbest-Zement-Masse, die aus Recycelt-Abbruchasbestteilen bzw. Recycelt-Abbruchasbest materialien und Zement besteht oder zumindest diese Komponenten enthält;
- einem die Oberseite des Kerns überdeckenden Dichtelement (4, 8), das als Betondeckel ausgebildet ist und nach dem Eingießen des Kerns (3) in den verbleibenden Innenbereich des Außenteils (2) hineinragt und mit dem Rand des Außenteils verbunden ist.

2. Verbundformstein nach Anspruch 1,
dadurch gekennzeichnet,
daß der Kern (3) eine Rohdichte ≧ 1000 kg/m³ aufweist.

3. Verbundformstein nach einem der Ansprüche 1 oder 2,
dadurch gekennzeichnet,
daß die Oberfläche des Kerns (3) fest mit der Innenwandung (2') des trogartigen Außenteils (2) verbunden ist.

4. Verbundformstein nach Anspruch 3,
dadurch gekennzeichnet,
daß eine formschlüssige Verbindung zwischen dem Kern (3) und dem Außenteil (2) vorgesehen ist.

5. Verbundformstein nach einem der Ansprüche 1 bis 4,
dadurch gekennzeichnet,
daß zwischen der Oberfläche des Kerns (3) und der Innenwandung (2') des Außenteils (2) eine Zwischenschicht (5) angeordnet ist, die insbesondere zur Haftverbesserung dient.

6. Verbundformstein nach Anspruch 5,
dadurch gekennzeichnet,
daß die Zwischenschicht (5) elastisch ist.

7. Verbundformstein nach Anspruch 5 oder 6,
dadurch gekennzeichnet,
daß die Zwischenschicht (5) mit der Oberseite des Kerns (3) fest verbunden ist und diese beim Bruch des Außenteils (2) fest umschließt.

8. Verbundformstein nach einem der vorhergehenden Ansprüche,
dadurch gekennzeichnet,
daß das trogartige Außenteil (2) eine Armierung (7), insbesondere eine Stahlarmierung aufweist.

9. Verbundformstein nach Anspruch 8,
dadurch gekennzeichnet,
daß die Armierung (7) in den Innenraum des trogartigen Außenteils (2) hineinstehende Abschnitte aufweist, die mit dem ausgehärteten Kern (3) Verbindungsanker bilden.

10. Verbundformstein nach Anspruch 9,
dadurch gekennzeichnet,
daß die Armierung (7) aus Doppel-T-Trägern (7') und ein T-Element (7'') frei in den Innenraum hineinsteht.

11. Verbundformstein nach einem der Ansprüche 8 bis 10,
dadurch gekennzeichnet,
daß Armierungabschnitte in den Bereich des Dichtelements (4) hineinstehen.

12. Verbundformstein nach einem der vorhergehenden Ansprüche,
dadurch gekennzeichnet,
daß das Dichtelement (8) einen umgekehrt hutförmigen querschnitt aufweist.

13. Verbundformstein nach einem der vorhergehenden Ansprüche,
dadurch gekennzeichnet,
daß das Dichtelement (8) umlaufende, von einem Mittelteil (8') aus rechtwinklig abgewinkelte Randabschnitte (8a, 8b, 8c, 8c) aufweist, die zur unmittelbaren Auflage auf und Verbindung mit entsprechenden freien, oberen Randflächen (21, 22, 23, 24) des trogartigen Außenteils (2) gelangen.

14. Verbundformstein nach Anspruch 13,
dadurch gekennzeichnet,
daß das die umlaufenden Randabschnitte (8a, 8b, 8c, 8d) miteinander verbindende, flächige Mittelteil (8') des Dichtelements (8) zur vorzugsweise unmittelbaren Auflage auf und Verbindung mit der zunächst noch freiliegenden Oberfläche des Kerns (3) gelangt.

15. Verbundformstein nach einem der vorhergehenden Ansprüche,
dadurch gekennzeichnet,
daß die Unterseite (9) des trogartigen Außenteils (2) mit einem zusätzlichen, vorzugsweise plattenartig ausgebildeten Basiselement (10) ebenfalls aus Beton versehen ist.

16. Verbundformstein nach Anspruch 15,
dadurch gekennzeichnet,
daß das Basiselement (10) dem Öffnungsquerschnitt des Innenraums des Außenteils (2) entsprechende Längen- und Breitendimensionen aufweist.

17. Verbundformstein nach den Ansprüchen 12 bis 15,
dadurch gekennzeichnet,
daß das Basiselement (10) in der Weise ausgebildet ist, daß es eine dem inneren Hutprofilquerschnitt des Dichtelements (8) angepaßte Dimensionierung aufweist, wodurch das Basiselement (10) in die durch das Hutprofil des Dichtelements (8) gebildete Ausnehmung (8'') passend einsetzbar ist.

18. Verbundformstein nach einem der vorhergehenden Ansprüche,
dadurch gekennzeichnet,
daß die Unterseite (9) des trogartigen Außenteils (2) eine Mehrzahl von platten- oder würfelartig ausgebildeten Basiselementen (10') aufweist, die derart angeordnet sind, daß Verbundformsteine unter Bildung eines Verbundmauerwerkes mit seitlichem Versatz oder Versatz nach vorne und hinten bei Eingriff der Basiselemente (10') in Ausnehmungen von darunterliegenden Verbundformsteinen übereinanderstapelbar sind.

19. Verwendung eines Verbundformsteins nach einem der vorhergehenden Ansprüche als Lärmschutzwall-Bauelement.

20. Verwendung eines Verbundformsteins nach einem der vorhergehenden Ansprüche als thermisches Isolierelement.

21. Verwendung eines Verbundformsteins nach einem der vorhergehenden Ansprüche als Sichtschutzwallbauelement.

22. Verwendung eines Verbundformsteins nach einem der vorhergehenden Ansprüche als Böschungsbauelement.

23. Verwendung eines Verbundformsteins nach einem der vorhergehenden Ansprüche als Uferbefestigungsbauelement.

24. Verwendung eines Verbundformsteins nach einem der vorhergehenden Ansprüche als Füllmaterial.

25. Verfahren zur Herstellung eines Verbundformsteins, mit folgenden Verfahrensschritten:
a) Herstellung eines formstabilen, selbsttragenden, trogartigen Außenteils aus Beton;
b) Herstellung einer gießfähigen Mischung, die aus zerkleinerten, insbesondere in einem geschlossenen System zermahlenen Recycelt-Abbruchasbestmaterialien , Wasser, Zement und gegebenenfalls weiteren Füllstoffen besteht;
c) Eingießen der Masse in den Innenraum des trogartigen Außenteils;
d) Aushärtung der Masse zu einem festen Kern;
e) Aufbringen eines die Oberseite des Kerns vollständig überdeckenden Dichtelements in Form eines Betongußdeckels, der sich mit dem Rand des Außenteils verbindet und in den Innenbereich des Außenteils eingegossen wird.

26. Verfahren nach Anspruch 25,
dadurch gekennzeichnet,
daß die Innenwandung des trogartigen Außenteils vor dem Eingießen der Abbruchasbest-Zementmasse mit einer Zwischenschicht ausgekleidet wird.

27. Verfahren nach Anspruch 25 oder 26,
dadurch gekennzeichnet,
daß zunächst eine Trennschicht auf die Innenwandung des trogartigen Außenteils aufgebracht wird, sodann eine Zwischenschicht aufgespritzt oder aufgetragen wird und das Eingießen der Abbruch-Zementmasse noch vor der Aushärtung der Zwischenschicht erfolgt.

28. Deponie zur Endlagerung von Abbruchasbestzement bzw. Abbruchasbestmaterialien,
dadurch gekennzeichnet,
daß sie aus nebeneinander und/oder übereinandergeschichteten Verbundformsteinen nach einem der Ansprüche 1 bis 18 besteht.

29. Deponie nach Anspruch 28,
dadurch gekennzeichnet,
daß sie im wesentlichen pyramiden- oder hügelförmig ausgebildet ist und mit einer begrünbaren Schicht bedeckt ist.

## Claims

1. Interconnectable moulded block (1) for constructing buildings, foundations, roads, substructures, bridges or similar, consisting of
- a trough-like external component (2) of concrete;
- a core (3) of hardened asbestos-cement mass, which consists of recycled asbestos fragments or recycled asbestos materials fragments and cement, or at least contains these components;
- a sealing element (4, 8) which covers the top of the core, which is formed as a concrete cover and, when the core (3) has been poured in, projects into the remaining inner area of the external component (2) and is connected to the edge of the external component.

2. Interconnectable moulded block according to Claim 1, characterised in that the core (3) has a gross density of ≧ 1000 kg/m³.

3. Interconnectable moulded block according to Claim 1 or Claim 2, characterised in that the surface of the core (3) is securely connected to the inner wall (2') of the trough-like external component (2).

4. Interconnectable moulded block according to Claim 3, characterised in that a form-locking connection is provided between the core (3) and the external component (2).

5. Interconnectable moulded block according to any one of Claims 1 to 4, characterised in that an intermediate layer (5), which is used in particular to improve adhesion, is disposed between the surface of the core (3) and the inner wall (2') of the external component (2).

6. Interconnectable moulded block according to Claim 5, characterised in that in that the intermediate layer (5) is resilient.

7. Interconnectable moulded block according to Claim 5 or Claim 6, characterised in that the intermediate layer (5) is securely connected to the top of the core (3) and surrounds the latter securely if the external component (2) breaks.

8. Interconnectable moulded block according to any one of the preceding claims, characterised in that the trough-type external component (2) comprises a reinforcement (7), in particular a steel reinforcement.

9. Interconnectable moulded block according to Claim 8, characterised in that the reinforcement (7) has portions which project into the interior of the trough-like external component (2) and form connecting anchors with the hardened core (3).

10. Interconnectable moulded block according to Claim 9, characterised in that the reinforcement (7) consists of double T-shaped bars (7') and one T-shaped element (7'') projects freely into the interior.

11. Interconnectable moulded block according to any one of Claims 8 to 10, characterised in that the reinforcement portions project into the area of the sealing element (4).

12. Interconnectable moulded block according to any one of the preceding claims, characterised in that the sealing element (8) has a cross-section in the form of an inverted hat.

13. Interconnectable moulded block according to any one of the preceding claims, characterised in that the sealing element (8) has peripheral edge portions (8a, 8b, 8c, 8d), which are deflected at right angles from a central part (8') and comes to rest directly on and into connection to corresponding free upper edge areas (21, 22, 23, 24) of the trough-like external component (2).

14. Interconnectable moulded block according to Claim 13, characterised in that the flat central part (8') of the sealing element (8), which central part connects the peripheral edge portions (8a, 8b, 8c, 8d) to one another, comes to rest for preferably directing on and into connection to the surface of the core (3) which is initially still free.

15. Interconnectable moulded block according to any one of the preceding claims, characterised in that the underside (9) of the trough-like external component (2) is provided with an additional base element (10), which is preferably plate-shaped and is likewise of concrete.

16. Interconnectable moulded block according to Claim 15, characterised in that the length and width dimensions of the base element (10) correspond to the cross-section of the aperture of the inner chamber of the external component (2).

17. Interconnectable moulded block according to Claims 12 to 15, characterised in that the base element (10) is formed in such a manner that it has dimensions adapted to the inner hat profile cross-section of the sealing element (8), whereby the base element (10) can be inserted such that it fits in a secure manner in the recess (8'') formed by the hat profile of the sealing element (8).

18. Interconnectable moulded block according to any one of the preceding claims, characterised in that the underside (9) of the trough-like external component (2) comprises a plurality of base elements (10'), which are plate-shaped or cuboid and are disposed in such a manner that interconnectable moulded blocks can be stacked above one another with a lateral offset or an offset to the front and rear when the base elements (10') engage in recesses in interconnectable moulded blocks located therebelow, forming an interconnected wall.

19. Application of an interconnectable moulded block according to any one of the preceding claims as a component for a sound-proofing wall.

20. Application of an interconnectable moulded block according to any one of the preceding claims as a heat-insulating element.

21. Application of an interconnectable moulded block according to any one of the preceding claims as a component for a concealing wall.

22. Application of an interconnectable moulded block according to any one of the preceding claims as a component for a ramp.

23. Application of an interconnectable moulded block according to any one of the preceding claims as a component for securing banks.

24. Application of an interconnectable moulded block according to any one of the preceding claims as filler material.

25. Method of manufacturing an interconnectable moulded block, having the following method steps:
a) manufacturing a trough-like concrete external component which has inherent stability and is self-supporting;
b) producing a pourable mixture, which consists of recycled asbestos material fragment that have been crushed, in particular ground in a closed system, water, cement, and, optionally, further filler substances;
c) pouring the mass into the interior of the trough-like external component;
d) setting the mass to a solid core;
e) applying a sealing element, which completely covers the top of the core and is in the form of a cast concrete cover which is connected to the edge of the external component and is poured into the inner area of the external component.

26. Method according to Claim 25, characterised in that the inner wall of the trough-like external component is cladded with an intermediate layer prior to the pouring in of the asbestos fragment-cement mass.

27. Method according to Claim 25 or Claim 26, characterised in that a separating layer is firstly applied to the inner wall of the trough-like external component, and an intermediate layer is then sprayed on or applied, and the pouring in of the fragment-cement mass is performed before the intermediate layer hardens.

28. Dump for dumping asbestos cement fragments or asbestos material fragments, characterised in that it consists of interconnectable moulded blocks according to any one of Claims 1 to 18, stacked adjacent on another and/or above one another.

29. Dump according to Claim 28, characterised in that it is essentially pyramid-shaped or hill-shaped and is covered with a layer which can be grassed over.

## Revendications

1. Bloc moulé composite (1) pour l'édification de bâtiments, fondations, voies de circulation, infrastructures, ponts ou constructions analogues, constitué :
- d'une partie extérieure (2) en béton, en forme de cuvette,
- d'un noyau (3) formé d'une masse d'amiante-ciment durcie qui est constituée de ciment et de morceaux d'amiante provenant du recyclage de produits de démolition ou de matériaux à base d'amiante provenant du recyclage de produits de démolition ou qui contient au moins ces éléments,
- et d'un élément d'étanchéité (4, 8) qui couvre la face supérieure du noyau et est réalisé sous la forme d'un couvercle en béton et qui, après la coulée du noyau (3), fait saillie dans la zone intérieure restante de la partie extérieure (2) et est relié au bord de cette partie extérieure.

2. Bloc moulé composite suivant la revendication 1, caractérisé en ce que le noyau (3) a une masse volumique apparente ≧ 1000 kg/m³.

3. Bloc moulé composite suivant l'une des revendications 1 et 2, caractérisé en ce que la surface du noyau (3) est reliée solidement à la paroi intérieure (2') de la partie extérieure (2) en forme de cuvette.

4. Bloc moulé composite suivant la revendication 3, caractérisé en ce qu'il est prévu une liaison par complémentarité de formes entre le noyau (3) et la partie extérieure (2).

5. Bloc moulé composite suivant l'une des revendications 1 à 4, caractérisé en ce qu'une couche intermédiaire (5), qui sert notamment à améliorer l'adhérence, est disposée entre la surface du noyau (3) et la paroi intérieure (2') de la partie extérieure (2).

6. Bloc moulé composite suivant la revendication 5, caractérisé en ce que la couche intermédiaire (5) est élastique.

7. Bloc moulé composite suivant l'une des revendications 5 et 6, caractérisé en ce que la couche intermédiaire (5) est reliée solidement à la face supérieure du noyau (3) et entoure solidement cette dernière en cas de rupture de la partie extérieure (2).

8. Bloc moulé composite suivant l'une des revendications précédentes, caractérisé en ce que la partie extérieure (2) en forme de cuvette comporte une armature (7), notamment une armature en acier.

9. Bloc moulé composite suivant la revendication 8, caractérisé en ce que l'armature (7) comporte des sections qui sont situées dans la cavité de la partie extérieure (2) en forme de cuvette et qui constituent des moyens d'ancrage de connexion avec le noyau (3) durci.

10. Bloc moulé composite suivant la revendication 9, caractérisé en ce que l'armature (7) est constituée de poutrelles (7') en double T et en ce qu'un élément (7'') en T est situé librement dans la cavité.

11. Bloc moulé composite suivant l'une des revendications 8 à 10, caractérisé en ce que des sections de l'armature sont situées dans la zone de l'élément d'étanchéité (4).

12. Bloc moulé composite suivant l'une des revendications précédentes, caractérisé en ce que l'élément d'étanchéité (8) a une section transversale en forme de chapeau retourné.

13. Bloc moulé composite suivant l'une des revendications précédentes, caractérisé en ce que l'élément d'étanchéité (8) comporte des sections marginales (8a, 8b, 8c, 8d) qui en font le tour et sont coudées perpendiculairement à partir d'une partie centrale (8') et qui viennent en appui direct contre des surfaces marginales supérieures libres (21, 22, 23, 24) correspondantes de la partie extérieure (2) en forme de cuvette et qui font l'objet d'une liaison avec ces surfaces marginales (21, 22, 23, 24).

14. Bloc moulé composite suivant là revendication 13, caractérisé en ce que la partie centrale (8'),de l'élément d'étanchéité (8),qui a une forme à deux dimensions et réunit entre elles les sections marginales périphériques (8a, 8b, 8c, 8d) vient en appui, de préférence direct, contre la surface du noyau (3) qui est initialement encore libre et en ce qu'elle fait l'objet d'une liaison avec cette surface du noyau (3).

15. Bloc moulé composite suivant l'une des revendications précédentes, caractérisé en ce que la face inférieure (9) de la partie extérieure (2) en forme de cuvette est pourvue d'un élément supplémentaire de base (10), également en béton, réalisé de préférence en forme de plaque.

16. Bloc moulé composite suivant la revendication 15, caractérisé en ce que l'élément de base (10) a des dimensions en longueur et en largeur correspondant à celles de la section transversale libre de la cavité de la partie extérieure (2).

17. Bloc moulé composite suivant les revendications 12 à 15, caractérisé en ce que l'élément de base (10) est réalisé de façon à avoir des dimensions adaptées à celles de la section transversale intérieure du profil en forme de chapeau de l'élément d'étanchéité (8), de sorte que l'élément de base (10) peut être placé d'une manière ajustée dans l'évidement (8'') formé par le profil en forme de chapeau de l'élément d'étanchéité (8).

18. Bloc moulé composite suivant l'une des revendications précédentes, caractérisé en ce que la face inférieure (9) de la partie extérieure (2) en forme de cuvette comporte plusieurs éléments de base (10') qui sont en forme de plaque ou de cube et qui sont disposés de façon telle que, lors de la réalisation d'une maçonnerie composite à décalage transversal ou décalage vers l'avant et vers l'arrière, des blocs moulés composites puissent être empilés les uns au-dessus des autres par emboîtement des éléments de base (10') dans des évidements de blocs moulés composites situés au-dessous.

19. Utilisation d'un bloc moulé composite suivant l'une des revendications précédentes en tant qu'élément de construction d'un mur antibruit.

20. Utilisation d'un bloc moulé composite suivant l'une des revendications précédentes en tant qu'élément d'isolation thermique.

21. Utilisation d'un bloc moulé composite suivant l'une des revendications précédentes en tant qu'élément de construction d'un mur protégeant des regards.

22. Utilisation d'un bloc moulé composite suivant l'une des revendications précédentes en tant qu'élément de construction d'un mur de soutènement.

23. Utilisation d'un bloc moulé composite suivant l'une des revendications précédentes en tant qu'élément de construction d'une digue.

24. Utilisation d'un bloc moulé composite suivant l'une des revendications précédentes en tant que matériau de remplissage.

25. Procédé de fabrication d'un bloc moulé composite, comportant les opérations suivantes de procédé :
a) fabrication d'une partie extérieure autoporteuse et indéformable, en béton, en forme de cuvette,
b) élaboration d'un mélange pouvant être coulé qui est constitué de matériaux à base d'amiante provenant du recyclage de produits de démolition, fragmentés, notamment broyés dans un système fermé, d'eau, de ciment et éventuellement d'autres charges,
c) coulée de la masse dans la cavité de la partie extérieure en forme de cuvette,
d) durcissement de la masse de façon à former un noyau solide,
e) pose d'un élément d'étanchéité recouvrant totalement la face supérieure du noyau et se présentant sous la forme d'un couvercle moulé en béton qui est relié au bord de la partie extérieure et est mis en place par coulée dans la zone intérieure de la partie extérieure.

26. Procédé suivant la revendication 25, caractérisé en ce qu'avant la coulée de la masse d'amiante-ciment provenant de produits de démolition, on revêt d'une couche intermédiaire la paroi intérieure de la partie extérieure en forme de cuvette.

27. Procédé suivant l'une des revendications 25 et 26, caractérisé en ce qu'on applique d'abord une couche de séparation sur la paroi intérieure de la partie extérieure en forme de cuvette,.puis on applique une couche intermédiaire par pulvérisation ou enduction et on procède à la coulée de la masse d'amiante-ciment provenant de produits de démolition avant le durcissement de la couche intermédiaire.

28. Décharge de stockage définitif d'amiante-ciment provenant de produits de démolition ou de matériaux à base d'amiante provenant de produits de démolition, caractérisée en ce qu'elle est constituée de blocs moulés composites suivant l'une des revendications 1 à 18 disposés en couches les uns à côté des autres et/ou les uns au-dessus des autres.

29. Décharge suivant la revendication 28, caractérisée en ce qu'elle est réalisée pratiquement en forme de pyramide ou en forme de colline et en ce qu'elle est couverte d'une couche pouvant être gazonnée.
